# EUROPÄISCHE PATENTSCHRIFT

(11) **EP 3 350 983 B1**
(45) Veröffentlichungstag und Bekanntmachung des Hinweises auf die Patenterteilung: **24.07.2019**
(21) Anmeldenummer: 16778676.3
(22) Anmeldetag: 02.09.2016
(51) Int. Cl.: H04N 5/225, B60R 11/04, H01R 13/00, H01R 103/00, B60R 16/02, H01R 13/52, H01R 24/52, H01R 43/02, H04N 7/10

(54) **ANSCHLUSSVORRICHTUNG FÜR EIN KAMERAMODUL, KAMERAMODUL SOWIE VERFAHREN ZUM KONTAKTIEREN EINES KAMERAMODULS**
CONNECTION DEVICE FOR A CAMERA MODULE, CAMERA MODULE AS WELL AS METHOD FOR CONTACTING A CAMERA MODULE
DISPOSITIF DE RACCORDEMENT POUR UN MODULE DE CAMÉRA, MODULE DE CAMÉRA ET PROCÉDÉ POUR METTRE EN CONTACT UN MODULE DE CAMÉRA

(30) Priorität: 14.09.2015 DE 102015217499
(43) Veröffentlichungstag der Anmeldung: 25.07.2018
(73) Patentinhaber: Conti Temic Microelectronic GmbH, 90411 Nürnberg (DE)
(72) Erfinder: PFEIFFER, Franz, 89079 Ulm / Einsingen (DE); LÄSSLE, David, 89129 Langenau (DE); KOHLER, Daniel, 88486 Kirchberg (DE); HEUBUSCH, Stefan, 89257 Illertissen (DE)
(86) Internationale Anmeldenummer: PCT/DE2016/200413
(87) Internationale Veröffentlichungsnummer: WO 2017/045683

(56) Entgegenhaltungen:
- WO-A1-2014/055224
- JP-A- 2007 022 364
- US-A1- 2013 242 099
- US-A1- 2015 222 795
- Anonymous: "Leitkleber", , 27. August 2013 (2013-08-27), XP055321783, Wikipedia Gefunden im Internet: URL:https://de.wikipedia.org/w/index.php?t itle=Leitkleber&oldid=121961889 [gefunden am 2016-11-22]

## Beschreibung

Die vorliegende Erfindung betrifft eine Anschlussvorrichtung für ein Kameramodul, ein Kameramodul und ein Verfahren zum Kontaktieren eines Kameramoduls. Insbesondere betrifft die vorliegende Erfindung eine Anschlussvorrichtung zum Anschluss eines Kameramoduls mit einem Koaxialkabel.

### Stand der Technik

Die Druckschrift US 2013/242099 A1 offenbart eine Kamera oder ein Kameramodul für eine Fahrzeugkamera. Ein elektrischer Anschluss eines Verbindungselements kann hierbei selbstjustierend ausgeführt sein, um während der Montage eine elektrische Verbindung herzustellen

Die Druckschrift JP 2007-002364 A offenbart eine Kamera für ein Fahrzeug. Das Gehäuse kann mit einem elektromagnetisch abschirmenden Substrat umgeben sein.

Kameramodule zum Erfassen von Bilddaten finden in immer mehr Anwendungsgebieten Einsatz. So werden beispielsweise auch für moderne Kraftfahrzeuge zahlreiche Kameramodule eingesetzt, um die Fahrzeugumgebung und gegebenenfalls auch den Innenraum des Fahrzeugs präzise zu erfassen. Die zunehmende Verbesserung der dabei verwendeten Kameramodule ermöglicht eine immer weiter ansteigende Bildqualität, sowie gegebenenfalls die Integration von weiteren Funktionen in den Kameramodulen. Darüber hinaus findet parallel auch eine zunehmende Miniaturisierung der eingesetzten Kameramodule statt.

Die Miniaturisierung, wie auch die steigende Datenrate aufgrund von hoher Bildqualität und gegebenenfalls zusätzlich zu übertragenen Funktionen macht den Einsatz neuartiger Übertragungsschnittstellen erforderlich. Neben bisher eingesetzten Lösungen auf Basis von verdrillten Einzelleitern (wie zum Beispiel LVDS Twisted Pair oder LVDS Twisted Quad) kommen bei neuartigen Kameramodulen vermehrt auf Lösungen auf Basis von koaxialen Leitungen zum Einsatz. Insbesondere werden dabei auch koaxiale Schnittstellen eingesetzt, die neben der Signalübertragung gleichzeitig eine Energieversorgung des Kameramoduls ermöglichen.

Derartige koaxiale Leitungen stellen jedoch im Anschlussbereich des Kameramoduls eine Herausforderung dar. Der Anschluss sollte dabei möglichst einfach realisierbar sein und dabei andererseits auch robust und resistent gegen elektromagnetische Störungen sein.

Es besteht daher ein Bedarf nach einem Anschluss eines Kameramoduls an eine koaxiale Leitung, die eine zuverlässige Kontaktierung der koaxialen Leitung mit dem Kameramodul ermöglicht. Insbesondere besteht ein Bedarf nach einem Anschluss eines Kameramoduls an eine koaxiale Leitung, der eine hohe Abschirmung bezüglich elektromagnetischer Störungen ermöglicht. Darüber hinaus besteht auch ein Bedarf nach einem Anschluss eines Kameramoduls an eine koaxiale Leitung, der beim Einbau eines Kameramoduls eine einfache und zuverlässige Kontaktierung ermöglicht.

### Offenbarung der Erfindung

Hierzu schafft die vorliegende Erfindung gemäß einem ersten Aspekt eine Anschlussvorrichtung zum Anschluss eines Koaxialkabels an ein Kameramodul mit den Merkmalen des unabhängigen Patentanspruchs 1.

Gemäß einem weiteren Aspekt schafft die vorliegende Erfindung ein Kameramodul mit einer Bilderfassungsvorrichtung mit den Merkmalen des Patentanspruchs 8.

Gemäß noch einem weiteren Aspekt schafft die vorliegende Erfindung ein Verfahren zum Kontaktieren eines Kameramoduls mit dem Merkmalen des Patentanspruchs 12.

### Vorteile der Erfindung

Der vorliegenden Erfindung liegt die Idee zugrunde, die durch den Außenleiter eines Koaxialkabels bereitgestellte Abschirmung des Koaxialkabels über der Anschlussvorrichtung eines Kameragehäuses und weiter über das gesamte Kameragehäuse hinweg fortzusetzen. Somit wirkt das komplette Kameragehäuse als faradayscher Käfig, der die Komponenten im Inneren des Kameragehäuses gegen elektromagnetische Einflüsse von außen abschirmt. Dabei wird die Kopplung zwischen Koaxialkabel und Kameramodul durch eine Anschlussvorrichtung realisiert, wobei der Außenleiter des Koaxialkabels vollumfänglich mit dem Kameramodul und insbesondere mit dem Gehäuse des Kameramoduls kontaktiert werden kann. Auf diese Weise wird eine Kontaktierung des Außenleiters des Koaxialkabels mit dem Kameramodul erzielt, die eine sehr niedrige Impedanz aufweist. Dadurch verbessert sich sowohl die Störabstrahlung des Kameramoduls, als auch die Störfestigkeit. Auf diese Weise wird nicht nur eine sehr gute Kontaktierung des Außenleiters des Koaxialkabels mit dem Kameramodul erzielt, sondern es entsteht auch im Anschlussbereich des Kameramoduls keine Lücke, die das Kameramodul anfällig für elektromagnetische Störungen machen könnte.

Auf diese Weise wird ein Anschluss für ein Kameramodul ermöglicht, der einerseits das Kameramodul sehr gut gegen elektromagnetische Störeinflüsse von außen abschirmt und darüber hinaus auch einen sehr einfach zu realisierenden Anschluss des Koaxialkabels an das Kameramodul beim Einbau eines Kameramoduls ermöglicht.

Gemäß einer Ausführungsform sind das Steckergehäuse und der zweite Anschluss der Anschlussvorrichtung mittels eines elektrisch leitfähigen Klebstoffs miteinander verbunden. Insbesondere kann die elektrische Verbindung durch eine vollständige ringförmige Klebestruktur um die Öffnung des Steckergehäuses herum realisiert werden. Auf diese Weise kann eine vollumfängliche Kontaktierung zwischen Anschlussvorrichtung und Steckergehäuse realisiert werden.

Gemäß einer Ausführungsform ist der zweite Anschluss des Anschlusselements in das Steckergehäuse mechanisch eingepresst. Durch ein mechanisches Einpressen des zweiten Anschlusses in das Steckergehäuse kann gleichzeitig eine mechanisch stabile Verbindung und eine elektrisch gut leitfähige, also niederohmige, Verbindung zwischen dem zweiten Anschluss und dem Steckergehäuse realisiert werden.

Gemäß einer weiteren Ausführungsform umfasst die Anschlussvorrichtung eine Kontakthülse. Die Kontakthülse ist dazu ausgelegt, den zweiten Anschluss des Anschlusselements mit dem zweiten Anschlussbereich der Kontaktplatte elektrisch zu verbinden. Ferner kann die Anschlussvorrichtung auch eine weitere Kontakthülse oder ein elektrisch leitfähiges Element umfassen, die den ersten Anschluss des Anschlusselements mit dem ersten Anschlussbereich der Kontaktplatte elektrisch verbindet. Auf diese Weise kann die Kontaktierung zwischen Anschlusselement und Kontaktplatte in koaxialer Bauweise realisiert werden, so dass eine gute Abschirmung vorhanden ist und darüber hinaus auch die Impedanz der koaxialen Leitung erhalten bleibt.

Gemäß einer weiteren Ausführungsform umfasst das Anschlusselement einen SMBA-Stecker bzw. einen FAKRA (Fachkreis-Automobil)-Stecker. Derartige Steckverbindungen sind insbesondere im Automobilbereich für koaxiale Leitungsführungen weit verbreitet, so dass sich auf diese Weise ein Kameramodul in einem Kraftfahrzeug mittels bereits vorhandener Steckverbindungen einfach integrieren lässt.

Gemäß einer Ausführungsform umfasst das Anschlusselement ein Gehäuseteil, das an die Anschlussbereiche der Kontaktplatte angepasst ist. Auf diese Weise ist eine besonders einfache Kontaktierung zwischen Anschlusselement und Kontaktplatte möglich.

Gemäß einer weiteren Ausführungsform umfasst die Anschlussvorrichtung ein Dichtelement. Das Dichtelement kann dabei auf dem Steckergehäuse auf einer dem Koaxialkabel zugewandten Seite angeordnet sein. Bei dem Dichtelement kann es sich beispielsweise um eine Dichtmasse handeln. Insbesondere sind zum Beispiel elastische Dichtmassen und/oder Zweikomponenten-Dichtmassen, wie zum Beispiel Dichtmassen auf Basis von Epoxidharz, möglich. Auf diese Weise ist es möglich, die Anschlussvorrichtung sehr gut gegen externe Einflüsse, wie zum Beispiel Schmutz, Staub, Feuchtigkeit, etc. abzudichten.

Gemäß einer weiteren Ausführungsform umfasst das Steckergehäuse der Anschlussvorrichtung einen metallischen Werkstoff. Alternativ kann das Steckergehäuse auch einen Kunststoff umfassen, der mit einer elektrisch leitfähigen Beschichtung versehen ist.

Gemäß einer weiteren Ausführungsform des Kameramoduls sind das Kameragehäuse und das Steckergehäuse der Anschlussvorrichtung elektrisch miteinander verbunden. Auf diese Weise kann die elektrische Abschirmung der Anschlussvorrichtung über das gesamte Kameramodul hinweg fortgesetzt werden.

Gemäß einer weiteren Ausführungsform sind das Kameragehäuse und das Steckergehäuse der Anschlussvorrichtung miteinander verschweißt. Durch Verschweißen kann sowohl elektrisch als auch mechanisch eine sehr gute Verbindung zwischen Kameragehäuse und Steckergehäuse realisiert werden.

Gemäß einer weiteren Ausführungsform umfasst das Kameramodul ein Federelement. Das Federelement ist dazu ausgelegt, die Leiterplatte der Bilderfassungsvorrichtung mit der Kontaktplatte der Anschlussvorrichtung elektrisch zu koppeln. Durch ein Federelement zwischen der Kontaktplatte der Anschlussvorrichtung und der Leiterplatte der Bilderfassungsvorrichtung kann auch bei thermischen Belastungen, Erschütterungen o.ä. stets eine sehr gute elektrische Kontaktierung erreicht werden.

Gemäß einer weiteren Ausführungsform des Verfahrens zum Kontaktieren des Kameramoduls umfasst das elektrische und mechanische Verbinden des Steckergehäuses der Anschlussvorrichtung mit dem Kameragehäuse des Kameramoduls ein Verschweißen. Insbesondere kann das elektrische und mechanische Verbinden ein Laserschweißen oder auch einen anderen Schweißvorgang umfassen.

Weitere Ausführungsformen und Vorteile der vorliegenden Erfindung ergeben sich aus der nachfolgenden Beschreibung unter Bezug auf die beigefügten Zeichnungen.

Dabei zeigen:
- Figur 1:: eine schematische Darstellung eines Aufbaus einer Anschlussvorrichtung gemäß einer Ausführungsform;
- Figur 2:: eine schematische Darstellung eines Querschnitts durch ein Kameramodul mit einer Anschlussvorrichtung zum Anschluss eines Koaxialkabels gemäß einer Ausführungsform; und
- Figur 3:: eine schematische Darstellung eines Ablaufdiagramms, wie es einem Verfahren gemäß einer Ausführungsform zugrunde liegt.

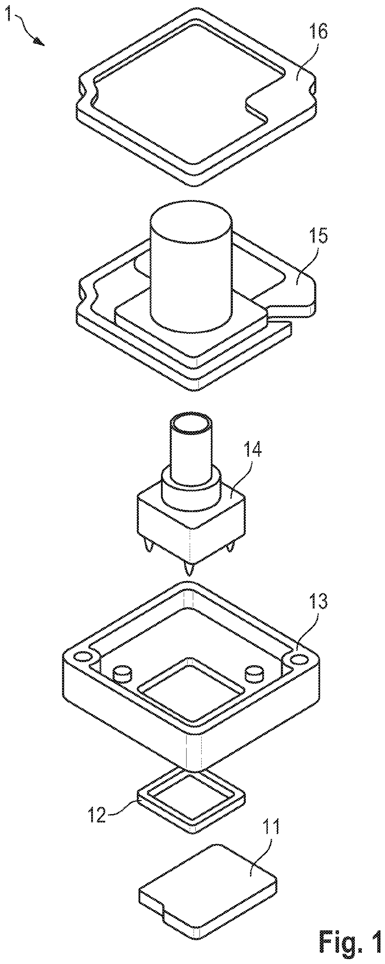

Figur 1 zeigt eine schematische Darstellung eines Aufbaus einer Anschlussvorrichtung 1 zum Anschluss eines Koaxialkabels an ein Kameramodul gemäß einer Ausführungsform. Die Anschlussvorrichtung 1 für das Kameramodul umfasst dabei ein elektrisch leitfähiges Steckergehäuse 13. Dieses elektrisch leitfähige Steckergehäuse 13 kann zum Beispiel aus einem elektrisch leitfähigen Metall, wie zum Beispiel Kupfer, Eisen, Aluminium oder ähnlichem hergestellt werden. Handelt es sich dabei um ein Metall, das relativ leicht zu einer Oxidation neigt, wie zum Beispiel Aluminium, so muss das Metall dabei gegebenenfalls vorbereitet werden, um die im Nachfolgenden näher beschriebenen elektrischen Kontaktierungen zuverlässig realisieren zu können. Alternativ ist es auch möglich, das Steckergehäuse 13 aus einem elektrisch nicht fähigen Material, wie zum Beispiel einem Kunststoff oder ähnlichem herzustellen. Beispielsweise kann ein solches Gehäuse durch Extrudieren eines Kunststoffs geformt werden. In diesem Fall kann zur Realisierung der elektrisch leitfähigen Eigenschaften des Gehäuses das elektrisch nicht leitfähige Material mit einer elektrisch leitfähigen Beschichtung versehen werden. Beispielsweise kann die elektrisch leitfähige Beschichtung durch Aufdampfen, Besprühen, Sputtern oder ähnliches realisiert werden. Das Steckergehäuse 13 weist dabei eine Öffnung 13a auf. Durch diese Öffnung 13a ist es möglich, elektrische Verbindungen vom Äußeren (in Fig. 1 oben) in das Innere (in Fig. 1 unten) der Anschlussvorrichtung 1 durchzuleiten.

In der Öffnung 13a des Steckergehäuses 13 ist ein Anschlusselement angeordnet. Beispielsweise kann es sich bei diesem Anschlusselement um eine standardisierte Steckerschnittstelle handeln. So sind zum Beispiel Steckerschnittstellen auf Basis eines FAKRA-Steckers (Fachkreis-Automobil-Stecker), weitere SMBA-Adapter oder auch beliebige andere Steckerschnittstellen, insbesondere Steckerschnittstellen für koaxiale Steckverbindungen, möglich. Das Anschlusselement umfasst dabei ein Gehäuseteil 15 aus einem elektrisch isolierenden Werkstoff, sowie elektrisch leitfähigen Anschlüssen. Das Gehäuseteil 15 kann dabei zum Beispiel aus einem Kunststoff hergestellt sein. Insbesondere sind zum Beispiel Gehäuseteile 15 möglich, die in einem Spritzgussverfahren hergestellt sind.

Für einen ersten elektrischen Anschluss kann in dem Gehäuseteil 15 zum Beispiel ein elektrisch leitfähiger Stift oder eine elektrisch leitfähige Kontakthülse angeordnet sein, worüber der Innenleiter eines Koaxialkabels angeschlossen werden kann. Ferner kann um diesen elektrisch leitfähigen Stift oder die Kontakthülse einen weitere Kontakthülse 14 angeordnet sein, die einen zweiten elektrischen Anschluss bildet und über die der Außenleiter des Koaxialkabels angeschlossen werden kann. Die weitere Kontakthülse 14 kann dabei vorzugsweise konzentrisch um den Stift bzw. die Kontakthülse zum Anschluss des Innenleiters angeordnet sein.

Auf diese Weise kann die weitere Kontakthülse 14 vollumfänglich, das heißt über gesamten Umlauf von 360° mit dem Außenleiter des Koaxialkabels verbunden werden. Dadurch wird die durch den Außenleiter des Koaxialkabels bereitgestellte Schirmung im gesamten Umfang über den zweiten Anschluss des Anschlusselements fortgesetzt.

Die weitere Geometrie des Anschlusselements und insbesondere des Gehäuseteils 15 kann darüber hinaus auch auf die Geometrie der (in Fig. 1 nach oben weisenden) Außenseite des Steckergehäuses 13 angepasst sein. Darüber hinaus kann über der Anordnung aus Steckergehäuse 13 und Anschlusselement ein geeignetes Dichtelement 16 angeordnet werden. Dieses Dichtelement 16 kann dazu ausgelegt sein, das Steckergehäuse 13 und insbesondere die Öffnung 13a des Steckergehäuses 13 gegen Umwelteinflüsse, wie zum Beispiel Schmutz, Staub, Feuchtigkeit, etc. abzudichten. Hierzu ist zum Beispiel eine geeignete Dichtung in Form eines elastischen Dichtelements möglich. Beispielsweise kann das Dichtelement 16 als elastische Masse eingebracht werden, die die Zwischenräume zwischen Anschlusselement und Gehäuse 13 ausfüllt und somit abdichtet. Anschließend kann eine solche elastische Masse zumindest teilweise aushärten. Somit kann ein späteres Wegfließen der elastischen Masse verhindert werden. Darüber hinaus sind auch beliebige weitere Materialien zum Abdichten möglich. Beispielsweise kann das Dichtelement 16 auch eine beliebige andere Dichtmasse, insbesondere auch eine Dichtmasse aus zwei oder mehr Komponenten umfassen, die nach Vermischen und Aufbringen ganz oder teilweise aushärten. Je nach Anwendungsgebiet sind dabei insbesondere auch UV-beständige Dichtelemente oder ähnliches möglich. Auf diese Weise kann eine entsprechend geforderte Dichtigkeit bzw. IP-Klasse bis hin zu IP6k9k erreicht werden.

Auf der Innenseite des Steckergehäuses 13, die der Außenseite gegenüberliegt, an der das Koaxialkabel angeschlossen wird, weist die Anschlussvorrichtung 1 eine Kontaktplatte 11 auf. Beispielsweise kann es sich bei dieser Kontaktplatte 11 um eine Leiterplatte handeln, wie sie zum Beispiel für gedruckte Schaltungen verwendet wird. Auf dieser Kontaktplatte kann eine Leiterbahnstruktur aufgebracht werden, die einen ersten Anschlussbereich und einen zweiten Anschlussbereich umfasst. Ein erster Anschlussbereich der Kontaktplatte 11 kann dabei zum Beispiel mit dem Innenleiter des Koaxialkabels elektrisch verbunden werden. Hierzu kann der erste Anschlussbereich der Kontaktplatte mit dem Stift bzw. der inneren Kontakthülse verbunden werden, die den ersten Anschluss des Anschlusselements bildet. Analog kann der zweite Anschlussbereich der Kontaktplatte 11 elektrisch mit dem Außenleiter des Koaxialkabels verbunden werden. Hierzu kann der zweite Anschlussbereich der Kontaktplatte 11 mit der weiteren Kontakthülse 14 elektrisch verbunden werden, die den ersten Anschluss des Anschlusselements bildet. Auf diese Weise können an der Kontaktplatte 11 die elektrischen Verbindungen des Innenleiters und des Außenleiters des Koaxialkabels bereitgestellt werden. Soweit erforderlich kann die Kontaktplatte 11 hierzu auch geeignete Durchkontaktierungen aufweisen, um die elektrischen Anschlussbereiche auch auf der dem Steckergehäuse 13 abgewandten Seite der Kontaktplatte 11 bereitzustellen.

Weiterhin ist auch das elektrisch leitfähige Steckergehäuse 13 der Anschlussvorrichtung 1 elektrisch mit dem Außenleiter des Koaxialkabels verbunden. Hierzu kann die elektrische Verbindung zum Beispiel mittels eines in sich geschlossenen elektrisch leitfähigen Klebstoffstrangs 12 realisiert werden. Dieser in sich geschlossene Klebstoffstrang 12 verbindet dabei vorzugsweise vollumfänglich das Steckergehäuse 13 mit der weiteren Kontakthülse 14 und somit mit dem Außenleiter des Koaxialkabels. Auf diese Weise wird eine niederohmige und niederimpedante elektrische Verbindung zwischen dem Steckergehäuse 13 und der weiteren Kontakthülse 14 erzielt, und die Abschirmung des Außenleiters des Koaxialkabels über das Steckergehäuse 13 fortgesetzt. Anstelle eines Klebstoffstrangs kann auch eine beliebige geeignete und elektrisch leitfähige Dichtmasse verwendet werden.

Weiterhin ist es auch möglich, die weitere Kontakthülse 14 in das Steckergehäuse 13 mechanisch einzupressen. In diesem Fall kann der elektrisch leitfähige Klebstoffstrang 12 entfallen. Durch das Einpressen der weiteren Kontakthülse 14 in das Steckergehäuse 13 erfolgt einerseits eine stabile mechanische Verbindung zwischen der weiteren Kontakthülse 14 und dem Steckergehäuse 13, und andererseits kann durch das Einpressen auch eine gute elektrische Verbindung zwischen den beiden Elementen erzielt werden.

Sowohl durch einen elektrisch leitfähigen Klebstoffstrang 12, als auch durch ein Einpressen der weiteren Kontakthülse 14 in das Steckergehäuse 13 wird eine möglichst gut elektrisch leitfähige Verbindung zwischen der weiteren Kontakthülse 14 und dem Steckergehäuse 13 erreicht. Die elektrische Verbindung zwischen diesen beiden Elementen 13, 14 ist dabei vorzugsweise mit einer möglichst geringen elektrischen Impedanz und niederohmig ausgeführt. Insbesondere kann die elektrische Verbindung möglichst vollumfänglich ausgeführt sein. Durch eine möglichst vollständige elektrische Verbindung entlang des gesamten Umfangs wird dabei ein Faraday'scher Käfig realisiert. Hierdurch erfolgt eine sehr gute Abschirmung vor elektrischen Strömungen.

Das Steckergehäuse 13 überdeckt möglichst vollständig die Kontaktplatte 11. Insbesondere wird die Seite der Kontaktplatte 11 durch das Steckergehäuse 13 vollständig überdeckt, die in Richtung des Anschlusselements 15 weist. Darüber hinaus umschließt das Steckergehäuse 13 auch die seitlichen Bereiche der Kontaktplatte 11. Somit wird die Kontaktplatte 11 mit Ausnahme der nach unten weisenden Seite vollständig durch das Steckergehäuse 13 umgeben. Auf diese Weise kann eine elektromagnetische Abschirmung in Form eines faradayschen Käfigs nach oben sowie zur Seite erreicht werden.

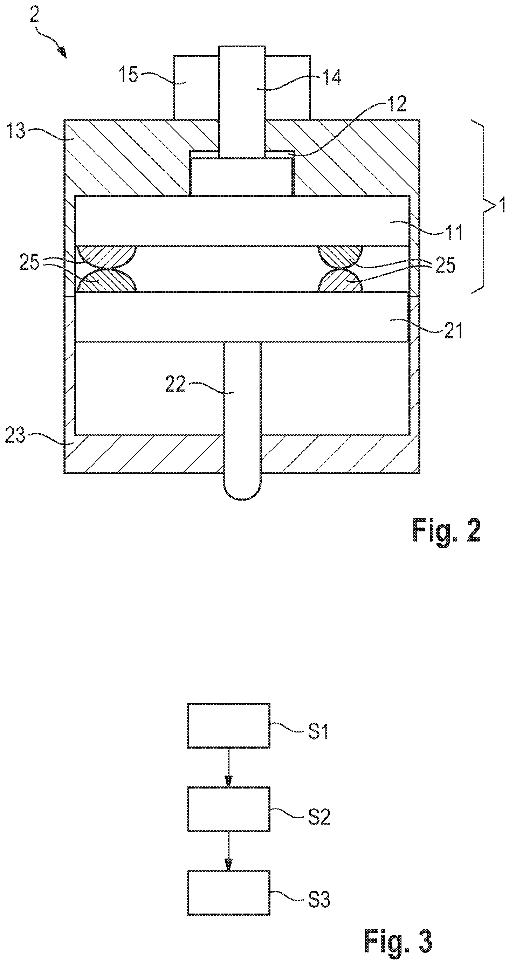

Figur 2 zeigt eine schematische Darstellung eines Querschnitts durch ein Kameramodul 2 gemäß einer Ausführungsform. Das Kameramodul 2 ist dabei mittels der zuvor beschriebenen Anschlussvorrichtung 1 mit einem Koaxialkabel kontaktiert. Das Kameramodul 2 umfasst dabei eine Bilderfassungsvorrichtung mit einem optischen Modul 22 und einer Leiterplatte 21. Dabei kann die Elektronik der Bilderfassungsvorrichtung ganz oder teilweise auf der Leiterplatte 21 angeordnet sein. Bei der Leiterplatte 21 kann es sich beispielsweise um eine Leiterplatte handeln, wie sie für gedruckte Schaltungen verwendet wird. Insbesondere kann die Leiterplatte 21 dabei auch Leiterbahnstrukturen umfassen, an denen eine elektrische Verbindung mit dem Innenleiter und dem Außenleiter des Koaxialkabels hergestellt werden soll. Hierzu wird die Leiterplatte 21 des Kameramoduls 2 derart an der Anschlussvorrichtung 1 angeordnet, dass die entsprechenden Bereiche der Leiterbahnstruktur in Richtung der Kontaktplatte 11 weisen. Die elektrische Verbindung zwischen dem ersten und zweiten Anschlussbereich der Kontaktplatte 11 und den korrespondierenden Anschlussbereichen auf der Leiterplatte 21 der Bilderfassungsvorrichtung können dabei zum Beispiel mittels Federelementen 25 oder anderen geeigneten elektrischen Verbindungselementen realisiert werden.

Die Bilderfassungsvorrichtung mit dem optischen Modul 22 und der Leiterplatte 21 ist dabei in einem elektrisch leitfähigen Kameragehäuse 23 angeordnet. Wie aus Figur 2 zu erkennen ist, schirmt dabei das elektrisch leitfähige Kameragehäuse 23 das optische Modul 22 und gegebenenfalls weitere Komponenten der Bilderfassungsvorrichtung nach außen ab. Einzig die in Richtung der Anschlussvorrichtung 1 weisende Seite der Leiterplatte 21 der Bilderfassungsvorrichtung ist dabei nicht durch das elektrisch leitfähige Kameragehäuse 23 abgeschirmt. Selbstverständlich kann das Kameragehäuse 23 ferner über eine Öffnung oder ein transparentes Fenster verfügen, über das Licht auf das optische Modul 22 einfallen kann.

Durch das Zusammenfügen von Anschlussvorrichtung 1 mit der durch das Kameragehäuse 23 abgeschirmten Bilderfassungsvorrichtung entsteht somit ein nahezu vollständig geschlossener Raum, der durch das elektrisch leitfähige Steckergehäuse 13 der Anschlussvorrichtung 1 und das elektrisch leitfähige Kameragehäuse 23 gebildet wird. Dabei kann das elektrisch leitfähige Kameragehäuse 23 auch elektrisch mit dem Steckergehäuse 13 verbunden werden. Ferner können Kameragehäuse 23 und Steckergehäuse 13 auch mechanisch miteinander verbunden werden. Beispielsweise kann eine solche elektrische und/oder mechanische Verbindung von Steckergehäuse 13 und Kameragehäuse 23 durch Schweißen realisiert werden. Beispielsweise können Steckergehäuse 13 und Kameragehäuse 23 mittels Laserschweißen miteinander verbunden werden. Darüber hinaus sind jedoch auch beliebige weitere geeignete Verfahren zum Verbinden von Steckergehäuse 13 und Kameragehäuse 23 möglich.

Nachdem das Steckergehäuse 13 und das Kameragehäuse 23 elektrisch und mechanisch miteinander verbunden sind, ist der Innenraum des so gebildeten Kameramoduls 2 durch die elektrisch leitfähige Außenhülle aus Steckergehäuse 13 und Kameragehäuse 23 sehr gut gegen elektromagnetische Störeinflüsse abgeschirmt. Die rotationssymmetrische Anbindung des Koaxialkabels an ein solches Kameramodul 2 ermöglicht dabei eine nahezu lückenlose Abschirmung der sensiblen Komponenten im Inneren des Kameragehäuses 23 bzw. Steckergehäuses 13.

Figur 3 zeigt eine schematische Darstellung eines Verfahrens zum Kontaktieren eines Kameramoduls 2, wie es einer Ausführungsform zugrunde liegt.

In Schritt S1 wird zunächst eine zuvor beschriebene Anschlussvorrichtung 1 bereitgestellt. Weiterhin erfolgt in Schritt S2 ein Kontaktieren der Anschlussbereiche der Kontaktplatte 11 mit korrespondierenden Kontakten des Kameramoduls 2, insbesondere mit Kontaktflächen auf der Leiterplatte 21 der Bilderfassungsvorrichtung. Daraufhin erfolgt in Schritt S3 ein elektrisches und mechanisches Verbinden des Steckergehäuses 13 der Anschlussvorrichtung 1 mit dem Kameragehäuse 23 des Kameramoduls 2.

Insbesondere kann das elektrische und mechanische Verbinden dabei ein zuvor beschriebenes Verschweißen, wie zum Beispiel ein Laserschweißen umfassen.

Zusammenfassend betrifft die vorliegende Erfindung einen Anschluss eines Kameramoduls über ein Koaxialkabel. Hierzu schafft die vorliegende Erfindung eine Anschlussvorrichtung für ein Koaxialkabel, das eine vollumfängliche Abschirmung durch Fortführen des Außenleiters über das gesamte Gehäuse der Anschlussvorrichtung und weiter über das gesamte Kameramodul ermöglicht. Hierzu wird der Außenleiter einer Schnittstelle für den Anschluss eines Koaxialkabels mit einem elektrisch leitfähigen Gehäuse elektrisch gekoppelt, wobei das Gehäuse eine elektrische Abschirmung der inneren Komponenten eines Kameramoduls ermöglicht.

## Patentansprüche

1. Anschlussvorrichtung (1) zum Anschluss eines Koaxialkabels an ein Kameramodul, mit:
einem elektrisch leitfähigen Steckergehäuse (13) mit einer Öffnung (13a);
einem Anschlusselement, das dazu ausgelegt ist, einen Innenleiter des Koaxialkabels mit einem ersten elektrischen Anschluss des Anschlusselements (15) zu verbinden und einen Außenleiter des Koaxialkabels mit einem zweiten Anschluss (14) des Anschlusselements zu verbinden, und wobei das Anschlusselement in der Öffnung (13a) des Steckergehäuses (13) angeordnet ist;
einer Kontaktplatte (11), die einen ersten Anschlussbereich umfasst, der mit dem ersten Anschluss des Anschlusselements elektrisch verbunden ist, und die einen zweiten Anschlussbereich umfasst, der mit dem zweiten Anschluss (14) des Anschlusselements elektrisch verbunden ist,
wobei das Steckergehäuse (13) eine der Öffnung (13a) des Steckergehäuses (13) zugewandte Seite und Seitenbereiche der Kontaktplatte (11) umschließt und wobei das Steckergehäuse (13) und der zweite Anschluss (14) vollumfänglich mit einer geringen Impedanz miteinander elektrisch verbunden sind; und
wobei das Steckergehäuse (13) mit dem zweiten Anschluss (14) des Anschlusselements (15) elektrisch verbunden ist.

2. Anschlussvorrichtung (1) nach Anspruch 1, wobei das Steckergehäuse (13) und der zweite Anschluss (14) des Anschlusselements (15) mittels eines elektrisch leitfähigen Klebstoffs (12) miteinander verbunden sind.

3. Anschlussvorrichtung (1) nach Anspruch 1, wobei der zweite Anschluss (14) des Anschlusselements (15) in das Steckergehäuse (13) mechanisch vollumfänglich eingepresst ist.

4. Anschlussvorrichtung (1) nach einem der Ansprüche 1 bis 3, wobei das Anschlusselement einen Fachkreis-Automobil-, FAKRA-, Stecker umfasst.

5. Anschlussvorrichtung (1) nach einem der Ansprüche 1 bis 4, wobei das Anschlusselement ein Gehäuseteil (15) umfasst, das an die Anschlussbereiche der Kontaktplatte (11) angepasst ist.

6. Anschlussvorrichtung (1) nach einem der Ansprüche 1 bis 5, mit ein einem Dichtelement (16), das auf der dem Koaxialkabel zugewandten Seite des Steckergehäuses (13) angeordnet ist.

7. Anschlussvorrichtung (1) nach einem der Ansprüche 1 bis 6, wobei das Steckergehäuse (13) aus einem metallischen Werkstoff oder einem elektrisch leitfähig beschichtetet Kunststoff hergestellt ist.

8. Kameramodul (2), mit:
einer Bilderfassungsvorrichtung, die ein optisches Modul (22) und eine Leiterplatte (21) umfasst, wobei das optische Modul (42) auf einer Vorderseite der Leiterplatte (21) angeordnet ist;
einem elektrisch leitfähigen Kameragehäuse (23), in dem die Bilderfassungsvorrichtung angeordnet ist; und
einer Anschlussvorrichtung (1) nach einem der Ansprüche 1 bis 7,
wobei der erste Anschlussbereich und der zweite Anschlussbereich der Kontaktplatte (11) jeweils elektrisch mit einem elektrischen Anschluss auf der Leiterplatte (21) der Bilderfassungsvorrichtung gekoppelt sind.

9. Kameramodul (2) nach Anspruch 8, wobei das Kameragehäuse (23) und das Steckergehäuse (13) elektrisch miteinander verbunden sind.

10. Kameramodul (2) nach Anspruch 8 oder 9, wobei das Kameragehäuse (23) und das Steckergehäuse (13) miteinander verschweißt sind.

11. Kameramodul (2) nach einem der Ansprüche 8 bis 10, mit einem Federelement (25), das dazu ausgelegt ist, die Leiterplatte (21) der Bilderfassungsvorrichtung mit der Kontaktplatte (11) elektrisch zu koppeln.

12. Verfahren zum Kontaktieren eines Kameramoduls, mit den Schritten:
Bereitstellen (S1) einer Anschlussvorrichtung (1) nach einem der Ansprüche 1 bis 7, Kontaktieren (S2) der Anschlussbereiche der Kontaktplatte (11) mit korrespondierenden Kontakten einer Leiterplatte (21) des Kameramoduls; und
elektrisches und mechanisches Verbinden (S3) des Steckergehäuses (13) der Anschlussvorrichtung (1) mit einem Kameragehäuse (23) des Kameramoduls, wobei das Steckergehäuse (13) und der zweite Anschluss (14) vollumfänglich mit einer geringen Impedanz miteinander elektrisch verbunden werden.

13. Verfahren nach Anspruch 12, wobei das elektrische und mechanische Verbinden (S3) ein Verschweißen, insbesondere ein Laserschweißen, umfasst.

## Claims

1. A connection device (1) for connecting a coaxial cable to a camera module, having:
an electrically conductive connector housing (13) having an opening (13a);
a connection element which is designed to connect an inner conductor of the coaxial cable to a first electrical connection of the connection element (15) and to connect an outer conductor of the coaxial cable to a second connection (14) of the connection element, and wherein the connection element is arranged in the opening (13a) of the connector housing (13);
a contact plate (11) which comprises a first connection region which is electrically connected to the first connection of the connection element, and which comprises a second connection region which is electrically connected to the second connection (14) of the connection element,
wherein the connector housing (13) encloses a side facing the opening (13a) of the connector housing (13) and side regions of the contact plate (11), and wherein the connector housing (13) and the second connection (14) are fully electrically connected to one another with a low impedance; and wherein the connector housing (13) is electrically connected to the second connection (14) of the connection element (15).

2. The connection device (1) according to Claim 1, wherein the connector housing (13) and the second connection (14) of the connection element (15) are connected to one another by means of an electrically conductive adhesive (12).

3. The connection device (1) according to Claim 1, wherein the second connection (14) of the connection element (15) is mechanically fully pressed into the connector housing (13).

4. The connection device (1) according to any one of Claims 1 to 3, wherein the connection element comprises a Fachkreis-Automobil, FAKRA, connector.

5. The connection device (1) according to any one of Claims 1 to 4, wherein the connection element comprises a housing part (15) which is adapted to the connection regions of the contact plate (11).

6. The connection device (1) according to any one of Claims 1 to 5, having a sealing element (16) which is arranged on the side of the connector housing (13) facing the coaxial cable.

7. The connection device (1) according to any one of Claims 1 to 6, wherein the connector housing (13) is manufactured from a metallic material or an electrically conductively coated plastic.

8. A camera module (2), having:
an image capturing device which comprises an optical module (22) and a printed circuit board (21), wherein the optical module (42) is arranged on a front side of the printed circuit board (21),
an electrically conductive camera housing (23), in which the image capturing device is arranged; and
a connection device (1) according to any one of Claims 1 to 7, wherein the first connection region and the second connection region of the contact plate (11) are each electrically coupled to an electrical connection on the printed circuit board (21) of the image capturing device.

9. The camera module (2) according to Claim 8, wherein the camera housing (23) and the connector housing (13) are electrically connected to one another.

10. The camera module (2) according to Claim 8 or 9, wherein the camera housing (23) and the connector housing (13) are welded to one another.

11. The camera module (2) according to any one of Claims 8 to 10, having a spring element (25) which is designed to electrically couple the printed circuit board (21) of the image capturing device with the contact plate (11).

12. A method for contacting a camera module, having the steps of:
providing (S1) a connection device (1) according to any one of Claims 1 to 7,
contacting (S2) the connection regions of the contact plate (11) with corresponding contacts of a printed circuit board (21) of the camera module; and
electrically and mechanically connecting (S3) the connector housing (13) of the connection device (1) to a camera housing (23) of the camera module, wherein the connector housing (13) and the second connection (14) are fully electrically connected to one another with a low impedance.

13. The method according to Claim 12, wherein the electrical and mechanical connecting (S3) comprises welding, in particular laser welding.

## Revendications

1. Dispositif de raccordement (1) pour le raccordement d'un câble coaxial à un module de caméra, avec :
un boîtier de connexion (13) électriquement conducteur avec une ouverture (13a) ;
un élément de raccordement conçu pour relier un conducteur intérieur du câble coaxial à un premier raccordement électrique de l'élément de raccordement (15) et un conducteur extérieur du câble coaxial à un deuxième raccordement (14) de l'élément de raccordement, l'élément de raccordement étant disposé dans l'ouverture (13a) du boîtier de connexion (13) ;
une plaque de contact (11), laquelle comprend une première zone de raccordement qui est reliée électriquement au premier raccordement de l'élément de raccordement, et comprend une deuxième zone de raccordement qui est reliée électriquement au deuxième raccordement (14) de l'élément de raccordement,
le boîtier de connexion (13) entourant un côté tourné vers l'ouverture (13a) du boîtier de connexion (13) et des zones latérales de la plaque de contact (11), et le boîtier de connexion (13) et le deuxième raccordement (14) étant intégralement reliés électriquement l'un à l'autre, avec une impédance faible ; le boîtier de connexion (13) étant relié électriquement au deuxième raccordement (14) de l'élément de raccordement (15).

2. Dispositif de raccordement (1) selon la revendication 1, le boîtier de connexion (13) et le deuxième raccordement (14) de l'élément de raccordement (15) étant liés l'un à l'autre au moyen d'un adhésif (12) électriquement conducteur.

3. Dispositif de raccordement (1) selon la revendication 1, le deuxième raccordement (14) de l'élément de raccordement (15) étant intégralement enfoncé de façon mécanique dans le boîtier de connexion (13).

4. Dispositif de raccordement (1) selon l'une des revendications 1 à 3, l'élément de raccordement comprenant un connecteur Fachkreis Automobil, FAKRA.

5. Dispositif de raccordement (1) selon l'une des revendications 1 à 4, l'élément de raccordement comprenant un élément de boîtier (15), lequel est adapté aux zones de raccordement de la plaque de contact (11).

6. Dispositif de raccordement (1) selon l'une des revendications 1 à 5, avec un élément d'étanchéité (16), lequel est disposé sur le côté du boîtier de connexion (13) tourné vers le câble coaxial.

7. Dispositif de raccordement (1) selon l'une des revendications 1 à 6, le boîtier de connexion (13) étant fabriqué dans un matériau métallique ou dans une matière plastique revêtue de façon électriquement conductrice.

8. Module de caméra (2), avec :
un dispositif de capture d'images, lequel comprend un module optique (22) et un circuit imprimé (21), le module optique (42) étant disposé sur un front du circuit imprimé (21) ;
un boîtier de caméra (23) électriquement conducteur, dans lequel le dispositif de capture d'images est disposé ;
un dispositif de raccordement (1) selon l'une des revendications 1 à 7,
la première zone de raccordement et la deuxième zone de raccordement de la plaque de contact (11) étant respectivement couplées de façon électrique avec un raccordement électrique sur le circuit imprimé (21) du dispositif de capture d'images.

9. Module de caméra (2) selon la revendication 8, le boîtier de caméra (23) et le boîtier de connexion (13) étant électriquement reliés l'un à l'autre.

10. Module de caméra (2) selon la revendication 8 ou 9, le boîtier de caméra (23) et le boîtier de connexion (13) étant soudés l'un avec l'autre.

11. Module de caméra (2) selon l'une des revendications 8 à 10, avec un élément à ressort (25) qui est conçu pour coupler électriquement le circuit imprimé (21) du dispositif de capture d'images et la plaque de contact (11).

12. Procédé pour la mise en contact d'un module de caméra, avec les étapes :
mettre à disposition (S1) un dispositif de raccordement (1) selon l'une des revendications 1 à 7,
mettre en contact (S2) les zones de raccordement de la plaque de contact (11) avec des contacts correspondants d'un circuit imprimé (21) du module de caméra ; et
relier électriquement et mécaniquement (S3) le boîtier de connexion (13) du dispositif de raccordement (1) avec un boîtier de caméra (23) du module de caméra, le boîtier de connexion (13) et le deuxième raccordement (14) étant intégralement reliés l'un à l'autre de façon électrique, avec une faible impédance.

13. Procédé selon la revendication 12, la liaison électrique et mécanique (S3) comprenant une soudure, en particulier une soudure au laser.
